# EUROPEAN PATENT SPECIFICATION

(11) **EP 2 569 185 B1**
(45) Date of publication and mention of the grant of the patent: **14.01.2015**
(21) Application number: 10851480.3
(22) Date of filing: 10.05.2010
(51) Int. Cl.: B60R 3/02, B60K 11/08, B62D 25/24, F01P 7/10

(54) **AIRFLOW REGULATING SYSTEM FOR A VEHICLE AND A METHOD FOR REGULATING AIRFLOW TO A RADIATOR BELONGING TO A VEHICLE COOLING SYSTEM**
LUFTSTROMREGELUNGSSYSTEM FÜR EIN FAHRZEUG UND VERFAHREN ZUR REGULIERUNG EINES LUFTSTROMS ZU EINEM RADIATOR EINES FAHRZEUGKÜHLSYSTEMS
SYSTÈME DE RÉGULATION DE CIRCULATION D'AIR POUR VÉHICULE ET PROCÉDÉ DE RÉGULATION DE CIRCULATION D'AIR JUSQU'À UN RADIATEUR APPARTENANT À UN SYSTÈME DE REFROIDISSEMENT DE VÉHICULE

(43) Date of publication of application: 20.03.2013
(73) Proprietor: Volvo Lastvagnar AB, 405 08 Göteborg (SE)
(72) Inventor: HJELM, Linus, S-414 83 Göteborg (SE); OLAISON, Benjamin, SE-431-43 Möldal (SE); MANHEDEN, Maria, SE- Göteborg (SE)
(74) Representative: Jönrup, Emil
(86) International application number: PCT/SE2010/000130
(87) International publication number: WO 2011/142694

(56) References cited:
- WO-A1-01/46570
- WO-A1-03/070519
- WO-A1-03/070519
- DE-A1- 19 608 048
- DE-A1-102004 035 326
- DE-A1-102004 035 326
- FR-A1- 2 866 604
- GB-A- 1 446 967
- JP-A- H10 147 194
- US-A- 4 429 666
- "Front bumper for large vehicle e.g. truck - has step that can be opened forward in substantial horizontal direction along bumper, such that step is provided with louvre to guide air to radiator when step is closed", DATABASE WPI, 19 November 1996 (1996-11-19), XP002981134,

## Description

### TECHNICAL FIELD

The present invention relates to an airflow regulating system for a vehicle, comprising an exterior fold-out front panel capable of providing access to the windscreen area of the vehicle. The invention also relates to a method for regulating airflow to a radiator belonging to a vehicle cooling system.

### BACKGROUND ART

Heavy vehicles, such as lorries, large semitrailer tractors and buses, are often provided with one or two fold-out panels arranged pivotally at the front below the windshield. When not in use, the panels can be arranged flush with the front profile of the vehicle. The panels can also be folded out forwards and locked into a horizontal position for use as steps for servicing the vehicle, for example when cleaning the windshield. The fold-out panels are usually designed as grille elements providing airflow to radiators belonging to the vehicle cooling system.

An example of a fold-out step panel is for example found in JP 10147194, which comprises the features mentioned in the preamble of claim 1. Other examples are found in DE 03070519 and in WO 03/070519. These panels need to be sufficiently rigid to carry the weight of a person including a safety margin. At the same time they should not add unnecessary weight to a vehicle. Moreover, they should promote airflow to a radiator positioned downstream the panel.

Fuel efficiency is an important development area in the field of heavy vehicle engineering. Even small improvements will have large effect as these vehicles are used extensively. Increasing combustion pressure in engines and development of engine after treatment systems often require more cooling capacity. The limited space available at the front of flat nosed vehicles makes it difficult to meet demands both for aerodynamic efficiency and cooling capacity. It is common practice to design the front of a cab over engine truck with airflow openings to cope with worst possible conditions for the engine cooling systems. All this cooling capacity is normally not needed when operating a truck.

A device for regulating airflow to the radiator of a vehicle is for example shown in US 2006/0060401. The device comprises a plurality of louvers controlled by a mechanism for adjusting the louvers between an open grille configuration and a closed grille configuration. For a vehicle comprising an exterior fold-out front panel capable of providing access to the windscreen area of the vehicle, this mechanism can be positioned between the front panel and the radiator. However, that position is not readily available without compromising space for the radiator/engine installation. Also, the system of louvers will restrict airflow to the radiator even if positioned in the open grille configuration.

### DISCLOSURE OF INVENTION

An object of the present invention is therefore to provide an efficient airflow regulating system for a vehicle, comprising an exterior fold-out front panel capable of providing access to the windscreen area of the vehicle. This object is achieved by means of a system, the characterizing features of which are apparent from the following claim 1.

The invention provides a plurality of advantages. For example, the invention adds functionality to a vehicle by using the well-known fold-out front panel to enhance both aerodynamics and temperature control for the vehicle. It can also be noted that, by means of the invention, this added functionality can be achieved at a small cost of added weight and investment. Furthermore, the invention does not encroach upon the limited space that is available at the front of a heavy vehicle, e.g. a cab over engine truck. The ability to reduce airflow to the cooling systems of a vehicle makes it possible to shorten the engine warm-up process, which can reduce exhaust emissions from the engine. Also, the cooling systems of a vehicle will be less subjected to dirt and soil when the airflow is reduced, which can prolong the service life of the cooling systems and the engine of a vehicle.

Additional advantageous embodiments of the invention are apparent from the following subsidiary claims.

### BRIEF DESCRIPTION OF DRAWINGS

The invention will be described in greater detail in the following with reference to the attached drawings, in which:
- Figure 1: is a schematic perspective view of the front of a conventional cab over engine truck,
- Figure 2: is a schematic side view of the motor compartment of the truck shown in Fig. 1, illustrating the airflow via the front panels,
- Figure 3: is a schematic side view of the motor compartment of the truck shown in Fig. 1, illustrating the fold-out front panels used as steps,
- Figure 4: is a schematic perspective view of the front of a cab over engine truck with an airflow regulating system in accordance with the invention in a closed configuration,
- Figure 5: is a schematic side view of the motor compartment of the truck shown in Fig. 4, illustrating a deflected airflow,
- Figure 6: is a schematic perspective view of the front of a cab over engine truck with an airflow regulating system in accordance with the invention in an open configuration, and
- Figure 7: is a schematic side view of the motor compartment of the truck shown in Fig. 4, illustrating the airflow via the open front panels.

### DETAILED DESCRIPTION OF A PREFERRED EMBODIMENT OF THE INVENTION

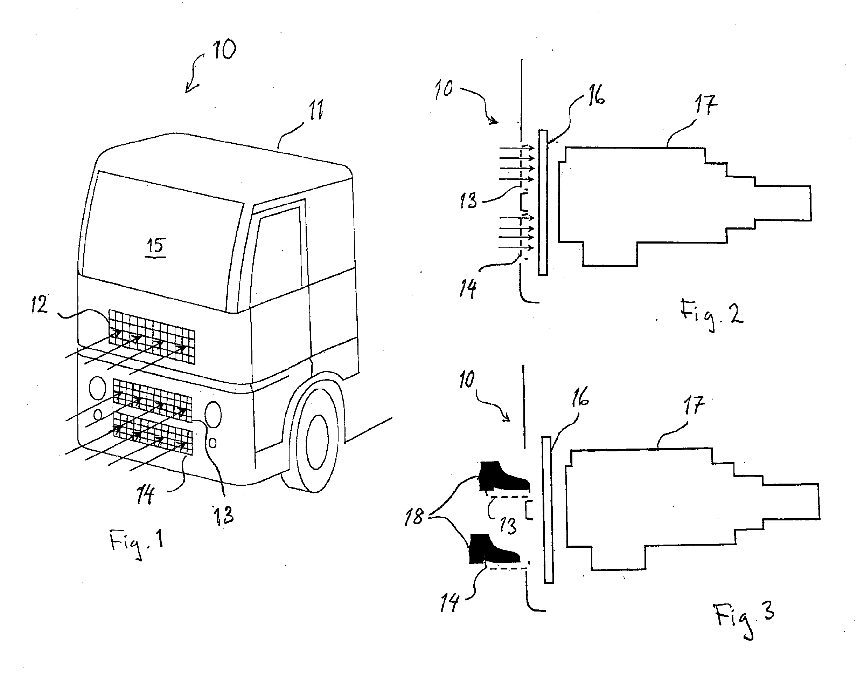

The cab over engine truck vehicle 10 shown in figure 1 is provided with a cab 11 positioned above the engine. Grille elements 12, 13 and 14 are arranged vertically below the windscreen 15 to provide airflow to the engine compartment and the cooling system 16 which is positioned in front of the engine 17 (see Fig. 2).

The lowest pair of grille elements 13, 14 is configured as fold-out elements to provide access to the windscreen area of the cab when the truck is parked. For this object, the fold-out grille elements 13, 14 are hinged at the lower edge to fold down from a substantially vertical position to a substantially horizontal position at the front of the vehicle. In the horizontal position, the fold-out grille elements can be used as steps as illustrated in figure 3 by the shoes 18.

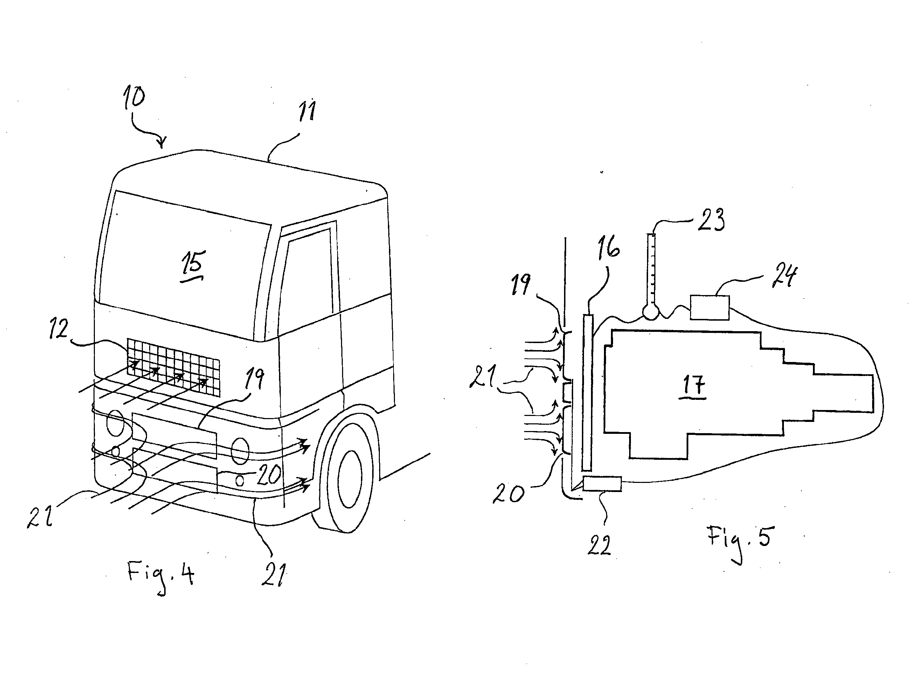

Figure 4 shows the front of a cab over engine truck vehicle 10 with an airflow regulating system in accordance with the invention. The vehicle is provided with a single grille element 12 arranged vertically below the windscreen 15 to provide airflow to the engine compartment and the cooling system 16 which is positioned in front of the engine 17.

The fold-out conventional grille elements 13, 14 described above, have been replaced with fold-out front panels 19, 20 which in the closed configuration are designed to divert airflow along the front surface of the vehicle as illustrated by the arrows 21. Hence, airflow into the engine compartment and to the cooling system 16 can be reduced as shown (see also figure 5).

The closed configuration of the fold-out front panels 19,20 is useful, for example when the engine is started, so that normal operating temperature can be reached faster, or during cold climate conditions, to maintain normal operating temperature. An advantage with the closed configuration is that the air resistance of the vehicle is reduced which lowers fuel consumption. Also, the cooling system is less affected by dirt and soil.

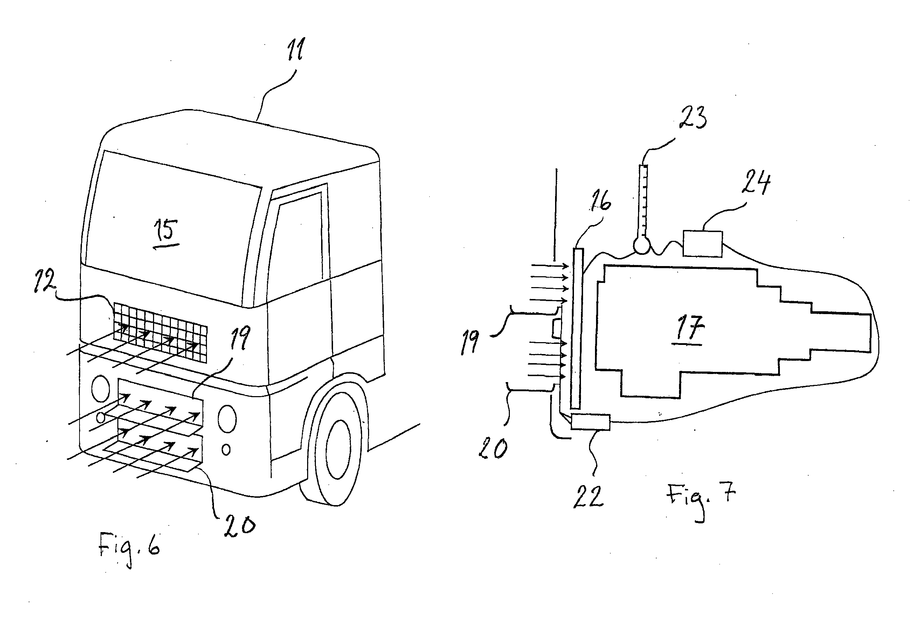

Figures 6 and 7 are identical to figures 4 and 5, but show the fold-out front panels 19, 20 in the open configuration, allowing airflow into the engine compartment and to the cooling system 16. The fold-out front panels 19, 20 are hinged at the lower edge to fold down from a substantially vertical position to a substantially horizontal position at the front of the vehicle, in the same manner as the conventional grille elements described above. Hence, the horizontal position, the fold-out front panels 19,20 can be used as steps as illustrated in figure 3.

Adjustment of the fold-out front panels between open and closed configurations can be accomplished automatically when the vehicle is moving. For this object, an actuator 22 is connected to the front panels 19,20, for example via a cable, via a linkage or via a rack and pinion drive, to pivot one panel or both panels between open and closed configurations. It is an advantage if each panel can be operated individually, so that airflow to the cooling system can be adjusted with great accuracy, but a mechanism that operates both panels in tandem is simpler and can also be functionally efficient. The actuator 22 can be energized by electricity or by hydraulic or pneumatic means.

Figure 5 and 7 shows a closed loop system for automatic control of panel configuration. The closed loop system comprises a sensor 23 for measuring temperature in the cooling system 16. The sensor 23 is connected to a control unit 24 which controls the actuator 22. Other types of control systems may be used with additional sensors, e.g. for sensing ambient temperature and/or sensing engine load and/or vehicle speed. When using the vehicle speed for control of panel configuration, low speed can indicate a condition for closing the panels.

Stored route information data in combination with a GPS system can be used in the actuator control system to optimize temperature management for the cooling system and for reducing fuel consumption. For example, by comparing GPS information with stored route information, the control system can determine that a demand for higher engine load will soon occur due to that the vehicle will soon be travelling uphill. Now the airflow regulating system according to the invention can be utilized to reduce temperature in the cooling system anticipating the rising temperature in the cooling system due to the coming uphill road section, before the vehicle has reached that road section. A sophisticated control system with a plurality of sensors will be able to fine-tune panel actuation in relation to e.g. the ambient air temperature, engine load, the weight and the speed of the vehicle, so that vehicle fuel consumption is minimized during the above described scenario.

Correspondingly, in a different scenario, the control system can determine that a reduced engine load will soon occur due to that the vehicle will soon be travelling downhill after travelling uphill. Now, the airflow regulating system according to the invention can determine when it is optimal to shift priority from cooling to vehicle aerodynamics, in order to reduce fuel consumption.

## Claims

1. An airflow regulating system for a vehicle (10), comprising an exterior fold-out front panel (19; 20) capable of providing access to the windscreen area of the vehicle, when in a substantially horizontal position, **characterized in that** the front panel (19; 20) is adjustable between open and closed configurations when the vehicle is moving.

2. The system as claimed in claim 1, **characterized in that** the front panel (19; 20) is adjustable by means of an automatically controlled actuator (22).

3. The system as claimed in claim 2, **characterized in that** the actuator (22) is controlled by a temperature sensor (23).

4. The system as claimed in claim 3, **characterized in that** the front panel (19; 20) is positioned in front of a radiator (16) belonging to a vehicle cooling system.

5. The system as claimed in claim 4, **characterized in that** the temperature sensor (23) is adapted to sense the temperature of a medium passing through the radiator (16).

6. The system as claimed in any one of claims 4-5, **characterized in that** the front panel (19; 20) is adapted to restrict airflow to the radiator (16) when in closed configuration.

7. The system as claimed in any one of claims 4-5, **characterized in that** the front panel (19; 20) is adapted to minimize airflow to the radiator (16) when in closed configuration.

8. The system as claimed in any one of claims 4-5, **characterized in that** the front panel (19; 20) is adapted to prevent airflow to the radiator (16) when in closed configuration.

9. The system as claimed in any one of the preceding claims, **characterized in that** the front panel (19; 20) is hinged to fold down from a substantially vertical position to a substantially horizontal position at the front of the vehicle (10).

10. A vehicle (10) comprising an airflow regulating system as claimed in any one of the preceding claims.

11. The vehicle as claimed in claim 10, **characterized in that** the vehicle consists of a heavy vehicle, such as a lorry or a passenger bus.

## Patentansprüche

1. Luftstromregelungssystem für ein Fahrzeug (10), das eine äußere ausklappbare Frontblende (19, 20) umfasst, die einen Zugang zu dem Windschutzscheibenbereich des Fahrzeugs bereitstellen kann, wenn sie sich in einer im Wesentlichen horizontalen Position befindet, **dadurch gekennzeichnet, dass** die Frontblende (19, 20) zwischen einer offenen und einer geschlossenen Konfiguration einstellbar ist, wenn sich das Fahrzeug bewegt.

2. System nach Anspruch 1, **dadurch gekennzeichnet, dass** die Frontblende (19, 20) mittels eines automatisch gesteuerten Stellglieds (22) einstellbar ist.

3. System nach Anspruch 2, **dadurch gekennzeichnet, dass** das Stellglied (22) durch einen Temperatursensor (23) gesteuert wird.

4. System nach Anspruch 3, **dadurch gekennzeichnet, dass** die Frontblende (19, 20) vor einem Kühler (16) positioniert ist, der zu einem Fahrzeugkühlsystem gehört.

5. System nach Anspruch 4, **dadurch gekennzeichnet, dass** der Temperatursensor (23) zur Erfassung der Temperatur eines Mediums ausgelegt ist, das durch den Kühler (16) strömt.

6. System nach irgendeinem der Ansprüche 4 bis 5, **dadurch gekennzeichnet, dass** die Frontblende (19, 20) dazu ausgelegt ist, eine Luftströmung zu dem Kühler (16) zu beschränken, wenn sie sich in der geschlossenen Konfiguration befindet.

7. System nach irgendeinem der Ansprüche 4 bis 5, **dadurch gekennzeichnet, dass** die Frontblende (19, 20) dazu ausgelegt ist, eine Luftströmung zu dem Kühler (16) zu minimieren, wenn sie sich in einer geschlossenen Konfiguration befindet.

8. System nach irgendeinem der Ansprüche 4 bis 5, **dadurch gekennzeichnet, dass** die Frontblende (19, 20) dazu ausgelegt ist, eine Luftströmung zu dem Kühler (16) zu verhindern, wenn sie sich in einer geschlossenen Konfiguration befindet.

9. System nach irgendeinem der vorhergehenden Ansprüche, **dadurch gekennzeichnet, dass** die Frontblende (19, 20) angelenkt ist, um aus einer im Wesentlichen vertikalen Position in eine im Wesentlichen horizontale Position an der Vorderseite des Fahrzeugs (10) nach unten zu klappen.

10. Fahrzeug (10) mit einem Luftstromregelungssystem nach irgendeinem der vorhergehenden Ansprüche.

11. Fahrzeug nach Anspruch 10, **dadurch gekennzeichnet, dass** das Fahrzeug aus einem Schwerfahrzeug, wie zum Beispiel einem Lastwagen oder einem Passagierbus, besteht.

## Revendications

1. Système de régulation d'écoulement d'air pour un véhicule (10), comprenant un panneau avant dépliable extérieur (19 ; 20) capable de fournir un accès à la zone pare-brise du véhicule, lorsqu'il est dans une position sensiblement horizontal, **caractérisé en ce que** le panneau avant (19 ; 20) peut être réglé entre des configurations ouverte et fermée lorsque le véhicule se déplace.

2. Système tel que revendiqué dans la revendication 1, **caractérisé en ce que** le panneau avant (19 ; 20) peut être réglé au moyen d'un actionneur à commande automatique (22).

3. Système tel que revendiqué dans la revendication 2, **caractérisé en ce que** l'actionneur (22) est commandé par un capteur de température (23).

4. Système tel que revendiqué dans la revendication 3, **caractérisé en ce que** le panneau avant (19 ; 20) est positionné devant un radiateur (16) appartenant à un système de refroidissement de véhicule.

5. Système tel que revendiqué dans la revendication 4, **caractérisé en ce que** le capteur de température (23) est adapté pour détecter la température d'un milieu passant à travers le radiateur (16).

6. Système tel que revendiqué dans l'une quelconque des revendications 4 à 5, **caractérisé en ce que** le panneau avant (19 ; 20) est adapté pour limiter l'écoulement d'air vers le radiateur (16) lorsqu'il est dans une configuration fermée.

7. Système tel que revendiqué dans l'une quelconque des revendications 4 à 5, **caractérisé en ce que** le panneau avant (19 ; 20) est adapté pour minimiser l'écoulement d'air vers le radiateur (16) lorsqu'il est dans une configuration fermée.

8. Système tel que revendiqué dans l'une quelconque des revendications 4 à 5, **caractérisé en ce que** le panneau avant (19 ; 20) est adapté pour empêcher l'écoulement d'air vers le radiateur (16) lorsqu'il est dans une configuration fermée.

9. Système tel que revendiqué dans l'une quelconque des revendications précédentes, **caractérisé en ce que** le panneau avant (19 ; 20) est articulé pour se replier d'une position sensiblement verticale à une position sensiblement horizontale à l'avant du véhicule (10).

10. Véhicule (10) comprenant une système de régulation d'écoulement d'air tel que revendiqué dans l'une quelconque des revendications précédentes.

11. Véhicule tel que revendiqué dans la revendication 10, **caractérisé en ce que** le véhicule consiste en un véhicule poids lourd, tel qu'un camion ou un autobus de passagers.
